# EUROPEAN PATENT SPECIFICATION

(11) **EP 2 513 283 B1**
(45) Date of publication and mention of the grant of the patent: **26.02.2014**
(21) Application number: 10790777.6
(22) Date of filing: 13.12.2010
(51) Int. Cl.: C12G 1/00, C12G 3/00, C12H 1/00

(54) **A METHOD FOR WINE FILTRATION**
VERFAHREN ZUR WEINFILTRIERUNG
PROCÉDÉ DE FILTRATION DU VIN

(30) Priority: 14.12.2009 IN CH30792009
(43) Date of publication of application: 24.10.2012
(73) Proprietor: Novozymes A/S, 2880 Bagsværd (DK); Laffort SAS, 33100 Bordeaux (FR)
(72) Inventor: CANAL-LLAUBERES, Rose-Marie, F-33000 Bordeaux (FR); DASGUPTA, Aindrila, Bangalore 560034 (IN); REYNOU, Gaëlle, F-33600 Pessac (FR)
(74) Representative: Kofoed, Gertrud Sonne
(86) International application number: PCT/EP2010/069504
(87) International publication number: WO 2011/073138

(56) References cited:
- GB-A- 1 171 969
- WHITAKER J R: "Pectic substances, pectic enzymes and haze formation in fruit juices", ENZYME AND MICROBIAL TECHNOLOGY, vol. 6, no. 8, August 1984 (1984-08), pages 341-349, XP002616858, DEP. OF FOOD SCI. & TECH., UNIV. OF CALIFORNIA, DAVIS, CALIFORNIA, USA DOI: 10.1016/0141-0229(84)90046-2
- SCHANDELMAIER B (ABBILDUNG): "Herbst 2006. Jungweinbehandlung = Autumn 2006. Young wine treatment", DAS DEUTSCHE WEINMAGAZIN, FACHVERLAG DR. FRAUND GMBH, FRIEDRICHSDORF, DE, vol. 22/28, 1 October 2006 (2006-10-01), pages 16-21, XP009119085, ISSN: 0943-089X
- DATABASE FSTA [Online] INTERNATIONAL FOOD INFORMATION SERVICE (IFIS), FRANkFURT-MAIN, DE; HUMBERT-GOFFARD A ET AL: "Effect of enzyme preparations based on beta -glucanases on clarification and filtration of wines. (translated)", XP002616859, Database accession no. FS-2004-04-Hj0850 & REVUE FRANCAISE D'OENOLOGIE, no. No. 201, 2003, pages 28-31, REVUE FRANCAISE D'OENOLOGIE 2003 NOVOZYMES FRANCE, 23 PARVIS DES CHARTRONS, 33074 BORDEAUX CEDEX, FRANCE
- DATABASE FSTA [Online] INTERNATIONAL FOOD INFORMATION SERVICE (IFIS), FRANkFURT-MAIN, DE; KURYK A ET AL: "Effects of enzymes on filterability of wines. Avoiding costs. (translated)", XP002616860, Database accession no. FS-2007-01-Hj0444 & DEUTSCHE WEINMAGAZIN, no. No. 17--18, 2006, page 38, DEUTSCHE WEINMAGAZIN 2006 FACHGEBIET FUER WEINANALYTIK UND GERAENKEFORSCHUNG, FACHHOCHSCHULE, WIESBADEN, GERMANY
- DATABASE FSTA [Online] INTERNATIONAL FOOD INFORMATION SERVICE (IFIS), FRANkFURT-MAIN, DE; PELLERIN P ET AL: "Optimising the ageing of wine on lees.", XP002616861, Database accession no. FS-2001-06-Hj1252 & AUSTRALIAN GRAPEGROWER & WINEMAKER, no. No. 444, 2001, page 14, AUSTRALIAN GRAPEGROWER & WINEMAKER 2001 DSM FOOD SPECIALITIES OENOLOGY, ZAE LA BAUME, F-34290 SERVIAN, FRANCE

## Description

### FIELD OF THE INVENTION

This application is related to the field of wine filtration. More particularly, this application relates to the use of enzymes for improvement of wine filterability.

### BACKGROUND OF THE INVENTION

An important step during wine making is wine filtration. Polysaccharides in wine, because of their size and colloidal nature, are known to complex with proteins and polyphenols contributing to the haze in wine and also cause difficulties during clarification and filtration. The various polysaccharides in wine include but are not limited to cellulose, pectin, glucan etc. These polysaccharides are derived from the juice or must from which the wine is made and are also sometimes products of microbial activity.

Many processes and materials are known to be used during wine making and filtration to remove these polysaccharides and improve filterability. For example, use of fining agents, filters, filtration equipments, enzymes etc. Fining agents such as casein, isinglass, albumin, gelatin, bentonite and other polyamide materials are commonly used prior to or during filtration process to remove the colloidal particles. Also known are enzymes like pectinases and glucanases which hydrolyze these polysaccharides, thus improving filterability.

There still exists a need for improved processes for wine filtration.

### SUMMARY OF THE INVENTION

In one aspect, the invention is related to a method of improving the filterability in wine filtration comprising:
a) providing a crude wine solution;
b) contacting the crude wine solution with
   i. a beta-1.3-glucanase;
   ii. a polygalacturonase;
   iii. a pectin lyase;
   iv. a pectinesterase;
   v. an endoarabinase;
c) obtaining the wire filtrate.

In one aspect, the polygalacturonase i obtainable from submerse fermentation.

In another aspect, the pectin lyase is obtainable from surface fermentation.

In one aspect, the polygalacturonase and/or pectin lyase is obtainable from Aspergillus.

In another aspect, the polygalacturonase and/or pectin lyase and/or pectinesterase and/or endoarabinanase is obtainable from Aspergillus.

In one aspect, the Aspergillus is *A*. *niger,* while in another aspect, it is *A. japonicus.*

In one aspect, the process comprises further contacting the crude wine with a pectinesterase.

In one aspect, the concentration of the pectinesterase is at least 15 units/Litre.

In one aspect, the process comprises further contacting the crude wine with an endoarabinanase.

In another aspect, the concentration of endoarabinanase is at least 0.10 units/litre.

In one aspect, the method results in improved filterability by at least 30% compared to a filtration done in the absence of the added enzymes.

### DETAILED DESCRIPTION OF THE INVENTION

Winemaking, or vinification, is the process of production of wine, starting with selection of the grapes and ending with bottling the finished wine. Winemaking involves several processes including, but are not limited to, selection of grapes and their varieties, their harvesting and destemming, primary crushing and fermentation, secondary fermentation, maturation, blending and fining, filtration, cold stabilization and bottling.

In brief, a typical wine making process can be described as below:

Grapes are selected and harvested manually or by using mechanical harvesters. The grapes are then generally crushed, de-stemmed and allowed for primary fermentation. During primary fermentation, yeast, that is normally already present on the grapes or is added externally as a culture, feed on the sugars in the must (fruit pulp) and multiply, producing carbon dioxide and alcohol. If desired, additional sugar is also added (chaptalization). During or after the process of alcohol fermentation, malolactic fermentation where malic acid is converted into lactic acid by bacteria may also take place. After primary fermentation, the wine product or crude wine is then made to undergo secondary fermentation and maturation process, which usually takes around 3-6 months or up to 18 months for long aging wines. During this stage, the wine is kept in anaerobic conditions or nearly anaerobic conditions to prevent oxidation. After secondary fermentation, the wine is also racked to separate it from the lees. Racking is the process of siphoning the wine off the lees into a new, clean barrel or tank to allow clarification and aid stabilization. Lees refers to deposits of dead yeast or residual yeast and other particles that precipitate, or are carried by the action of "fining", to the bottom of a vat of wine after fermentation and aging. The racking process is repeated several times during the aging of wine. During any time after maturation, the wine is also made to undergo the process of cold stabilization. During the cold stabilizing process, the temperature of the wine, is dropped to close to freezing for 1-2 weeks. This causes the tartrate crystals to separate from the wine and stick to the sides of the holding vessel. When the wine is drained from the vessels, the tartrates are left behind or the wine is filtered to secure removal. During protein stabilization process, unstable proteins are removed by adsorption onto fining agents like bentonite, preventing them from precipitating in the bottled wine. Subsequent to secondary fermentation, the wine is subjected to blending and fining. During blending, the wines from different batches and/or different grapes are mixed together to achieve a consistent taste. During fining, agents called fining agents are used to remove tannins, reduce astringency and remove microscopic particles that could cloud the wines. Commonly used fining agents include but are not limited to gelatin, potassium caseinate, egg whites, egg albumin, bone char, bull's blood, isinglass (Sturgeon bladder), PVPP, skim milk powder, egg yolk extract, bentonite (a volcanic clay-based filter) etc. After blending and fining, the wine is treated with preservatives like sulphur dioxide and potassium sorbate and subjected to filtration. Filtration is the process by which the particulate matter from the wine is removed by passing the wine through a series of filters. There are different types of filtrations that are done including but not limited to depth filtration or cross flow filtration. During depth filtration, the wine is pushed through filters made of cellulose or diatomaceous earth. In cross flow filtration, the wine is passed on the surface of filters, for example, in a parallel orientation (cross-flow). Subsequent to filtration, the wine is sometimes sterile filtered through membranes of 0.65 or 0.45 micron before wine is bottled and marketed.

It is commonly hypothesized that polysaccharides present in the wine can cause complexes with proteins and tannins and thus form colloidal complexes, which can cause problems during wine filtration. The commonly found polysaccharides in wine include but are not limited to cellulose, hemicelluloses and pectins which are structural polysaccharides arising from the plant cell wall. Other kinds of polysaccharides include but are not limited to the glucans which are present in the cell walls of the micro-organisms that are part of wine making, mainly the yeast *Saccharomyces,* used during fermentation and also the fungus *Botrytis,* which is a contaminant sometimes present on the grape surface,commonly called grey mold.

Presence of these polysaccharides in wine result in technical difficulties during wine making- for example, these can clog the filter material and thus wines containing relatively large quantity of polysaccharides are more difficult to filter than those from wines which have fewer quantities of the same. Indeed, filtration takes substantially more time and may use as much as five to ten times more filter plates than is the case with a normal wine.

It has been hypothesized that the filtration difficulty is primarily attributable to the glucan present as a colloid in the wine. The glucan present in the wine is a beta-glucan with a 1.3-beta-glucan main chain and 1.6-beta-linked side chains (beta 1.3-1.6 glucan) with an average molecular weight of about 1 million Dalton.

Various enzymes have been used to hydrolyze the polysaccharides present in the wine so that the filterability of the wine is improved.

The inventors have surprisingly found that a treatment of a crude wine preparation with a beta 1.3-glucanase, a polygalacturonase and a pectin lyase greatly improves the filterability when compared to a crude wine preparation that is not treated with these enzymes.

The inventors have surprisingly also found that a treatment of a crude wine preparation with a beta 1.3-glucanase, a polygalacturonase, a pectin lyase, a pectinesterase and an endoarabinanase greatly improves the filterability when compared to a crude wine preparation that is not treated with these enzymes.

Thus the invention is related to a method of improving the filterability in wine filtration comprising:
a) providing a crude wine solution;
b) contacting the crude wine solution with
   i. a beta-1.3 glucanase;
   ii. a polygalacturonase;
   iii. a pectin lyase;
   iv. a pectinesterase;
   v. an endoarabinanase;
c) obtaining the wine filtrate.

"Crude wine" according to this invention denotes a wine at any stage between the first racking and before the final filtration, prior to bottling, in the process of wine making.

### Beta 1.3 glucanase (EC 3.2.1.58)

Beta 1.3 glucanases catalyse successive hydrolysis of beta-D-glucose units from the non-reducing ends of (1->3ybeta-D-glucans, releasing alpha-glucose. These enzymes are also alternatively called as Glucan 1.3-beta-glucosidase, exo-1.3-beta-glucanase or exo-1.3-beta-glucosidase.

Glucans are known in the art. They are polysaccharides of D-glucose monomers linked by Oglycosidic bonds. Based on the type of O-glycosidic bonds, they can be alpha-glucans and beta-glucans. Examples of alpha-glucans include but not limited to dextran, starch, pullulan etc. Examples of beta-glucans include but not limited to cellulose, laminarin etc. Based on the carbon atoms participating in the linkages, the glucans can have 1-3, 1-4 or 1-6 type of linkages. For example, cellulose contains beta 1-4 linkages, dextran contains alpha 1-6 linkages, laminarin contains both beta 1-3 and beta 1-6 linkages.

A preferred beta 1.3 glucanase is Glucanex® available from Novozymes A/S, Denmark

The glucanase activity is determined colorimetrically by reacting with alkaline 2-hydroxy-3,5-dinitrobenzoic acid and then heating to 100°C. The resulting yellow-brown colour is measured using a spectrophotometer at 540 nm.

One Beta Glucanase Unit (BGXU) corresponds to the quantity of enzyme required to produce 1 micromole of reducing sugars per minute under standard conditions(incubation at 30°C for 10 minutes at pH 4.40).

Preferably the beta 1.3 glucanase is present in the range of at least about 5 units, such as at least about 10 units, such as at least about 15 units, such as at least about 20 units, such as at least about 25 units, such as at least about 30 units, such as at least about 35 units, such as at least about 40 units, such as at least about 45 units, such as at least about 50 units, such as at least about 55 units, such as at least about 60 units, such as at least about 65 units, such as at least about 70 units per litre of the crude wine.

### Polygalacturonase (EC 3.2.1.15)

Polygalacturonases are pectinases that catalyze random hydrolysis of (1.4)-alpha-D-galactosiduronic linkages in pectate and other galacturonans. They are also called as pectin depolymerase.

A preferred polygalacturonase is Pectinex ultra® available from Novozymes A/S.

Polygalacturonase hydrolyses the alpha-1,4-glycosidic bonds in polygalacturonic acid with the resultant release of galacturonic acid. This reducing sugar reacted then with 3,5-dinitrosalicylic acid (DNS). The colour change produced due to the reduction of DNS is proportional to the amount of galacturonic acid released, which in tum is proportional to the activity of polygalacturonase in the sample.

One polygalacturonase unit (PGNU) is defined as the amount of enzyme which will produce 1 mg of galacturonic acid sodium salt under standard conditions (acetate buffer, pH 4.5, 40°C, 10 min reaction time, 540nm)

Preferably, polygalacturonases are present in an amount of at least 20 units per litre, such as at least 25 units per litre, such as at least 30 units per litre, such as at least 35 units per litre, such as at least 40 units or such as at least 45 units or such as at least 50 units or such as at least 55 units such as at least 60 units per litre of crude wine.

### Pectin lyases (EC 4.2.2.10)

Pectin lyases are pectinases that catalyze eliminative cleavage of (1.4)-alpha-D-galacturonan methyl ester to give oligosaccharides with 4-deoxy-6-O-methyl-alpha-D-galact-4-enuronosyl groups at their non-reducing ends. They are alternatively called Pectolyase, Polymethylgalacturonic transeliminase, Pectin methyltranseliminase, Pectin trans-eliminase etc.

A preferred pectin lyase is Neopectinase PL-1 available from Novozymes A/S.

The pectin lyase enzymatic reaction consists of splitting alpha 1-4 galacturonosidyl bond producing unsaturated delta 4,5 uronide. The double bond with carbonyl function in C6 has an absorption in U.V. Optical density at 235 nm assays the pectin lyase activity.

One Pectin lyase (PL) unit is the quantity of enzyme that catalyses the split of bound endo alpha 1-4 galacturonosidyl (C6 Methyl ester) forming one micromole of delta 4,5 unsaturated product in one minute, according to described conditions of 45°C and pH 5.5.

Preferably, pectin lyases are present in an amount at least 2.0 units per litre of crude wine such as at least 2.5 units or such as at least 3.0 units or such as at least 3.5 units or such as at least 4.0 or such as at least 4.5 units or such as at least 5.0units or such as at least 5.5 units or such as at least 6.0 units or such as at least 6.5 units or such as at least 7.0 units or such as at least 7.5 units or such as at least 8.0 units or such as at least 8.5 units or such as at least 9.0 units, such as at least 9.5 units, such as at least 10.0 units, such as at least 10.5 units, such as at least 11.0 units, such as at least 11.5 units, such as at least 12.0 units, such as at least 12.5 units, such as at least 13.0 units, such as at least 13.5 units, such as at least 14.0 units, such as at least 14.5 units, such as at least 15.0 units, such as at least 15.5 units, such as at least 16.0 units, such as at least 16.5 units, such as at least 17.0 units, such as at least 17.5 units, such as at least 18.0 units, such as at least 18.5 units, such as at least 19.0 units, such as at least 19.5 units, such as at least 20.0 units, such as at least 22.0 units, such as at least 24.0 units, such as at least 26.0 units, such as at least 28.0 units, such as at least 30.0 units, such as at least 32.0 units, such as at least 34.0 units, such as at least 36.0 units, such as at least 38.0 units, such as at least 40.0 units, such as at least 42.0 units, such as at least 44.0 units, such as at least 46.0 units, such as at least 48.0 units, such as at least 50.0 units, such as at least 52.0 units, such as at least 54.0 units, such as at least 56.0 units, such as at least 58.0 units, such as at least 60.0 units, such as at least 62.0 units, such as at least 64.0 units, such as at least 66.0 units, such as at least 68.0 units, such as at least 70.0 units, such as at least 72.0 units, such as at least 74.0 units, such as at least 76.0 units, such as at least 78.0 units, such as at least 80.0 units, such as at least 82.0 units, such as at least 84.0 units, such as at least 86.0 units, such as at least 88.0 units, such as at least 90.0 units, such as at least 92.0 units, such as at least 94.0 units, such as at least 96.0 units, such as at least 98.0 units, such as at least 100.0 units, such as at least 102.0 units, such as at least 104.0 units, such as at least 106.0 units, such as at least 108.0 units, such as at least 110.0 units, such as at least 112.0 units, such as at least 114.0 units, such as at least 116.0 units, such as at least 118.0 units, such as at least 120.0 units, such as at least 122.0 units, such as at least 124.0 units, such as at least 126.0 units, such as at least 128.0 units, such as at least 130.0 units, such as at least 132.0 units, such as at least 134.0 units, such as at least 136.0 units, such as at least 138.0 units, such as at least 140.0 units, such as at least 142.0 units, such as at least 144.0 units, such as at least 146.0 units, such as at least 148.0 units, such as at least 150.0 units,per litre of crude wine.

Based on the nature of the organisms used in the fermentation process, the enzymes can also have or not have other activities, usually called the "side-activities". For example, if the organism used is an isolated naturally occurring organism, it is most likely that the enzymes fraction also contains other side activities that are present in addition to the main activity. In case the organism used is an organism that is a genetically modified organism, modified with the gene encoding the enzyme of interest, it is most likely that the enzyme fraction does not contain any significant side activity, apart from the main activity.

In one aspect, the polygalacturonase is obtainable from submerged fermentation.

Submerged fermentation (SmF) is known in the art and includes a process of growing a microorganism in a liquid medium. Submerged Fermentation is also alternatively called Submerged Liquid Fermentation or submerse fermentation

In one aspect, the pectin lyase is obtainable from surface fermentation.

In another aspect, the pectin lyase and/or pectinesterase and/or endoarabinanase is obtainable from surface fermentation.

Surface fermentation also called solid-state fermentation (SSF) is known in the art and is a process whereby an insoluble substrate or solid matrix is fermented with sufficient moisture but without being submerged in water. i.e., it involves growth of microorganisms on moist solid particles, in situations in which the spaces between the particles contain a continuous gas phase and a minimum of visible water. It is also known as Solid Substrate Fermentation. Most of the SSF processes are aerobic and so the term fermentation in the context of SSF is meant to mean the "controlled cultivation of organisms". Processes and apparatus for solid state fermentation are known in the art. For example, a useful reference is Mitchell D.A. et al., 2006, Solid-State Fermentation Bioreactors, published by Springer Berlin Heidelberg.

Filtration is the process of separation of the undissolved particulate matter from the rest of the suspension by passing the suspension through a filter or a series of filters. Filtration can be considered a type of clarification process. Filterability is a property of a solution or suspension, which makes it amenable to filtration.

Pectinase producing organisms are known in the art. They include microorganisms and higher plants. The microorganisms include bacteria, yeast and fungi. For example, the genus Aspergillus, Rhizopus, Bacillus, Pseudomonas, Fusarium, Penicillium, Saccharomyces, , Erwinia etc are all known to produce pectinase enzymes. The procedure for carrying out the submerged and solid state fermentations for many of these organisms is also known in the art.

In one aspect of the invention, the polygalacturonase and/or pectin lyase is obtainable from Aspergillus.

In one aspect of the invention, the polygalacturonase and/or pectin lyase and/or pectinesterase and/or endoarabinanase is obtainable from Aspergillus.

Aspergillus is known in the art. It is a genus of Fungi belonging to the Trichocomaceae family of the order Eurotiales [Howard, HD, Pathogenic Fungi in Humans and Animals, 2nd edition Pathogenic Fungi in Humans and Animals, pp 240]. Sterigmatocystis is an obsolete synonym of this genus. More than 150 species of the genus Aspergillus are known in the art. These include but not limited to *Aspergillus niger, Aspergillus flavus, Aspergillus fumigatus, Aspergillus oryzae, Aspergillus japonicus* etc.

In a preferred embodiment, the polygalacturonase and/or pectin lyase and/or pectinesterase and/or endoarabinanase is obtainable from *Aspergillus niger.* In another preferred embodiment, they are obtainable from *Aspergillus japonicus.*

In one aspect, the invention further comprises contacting the crude wine with a pectinestersase.

In another aspect, the invention further comprises contacting the crude wine with a pectinestersase and/or an endoarabinanase.

### Pectinesterase (EC 3.1.1.11)

Pectin esterases are pectinases that hydrolyze pectin to methanol and pectate. They are alternatively also called as pectin demethoxylase, pectin methoxylase, pectin methylesterase etc.

Pectin esterase catalyses the release of methanol from pectin with a resultant decrease in pH. Sodium hydroxide is added to maintain the pH at 4.5. The amount of sodium hydroxide consumed is an indication of the enzyme activity.

A preferred pectinesterase is the pectinesterase present in Neopectinase PL-1 available from Novozymes A/S.

One unit of PE activity is that amount of enzyme which consumes 1 micro equivalent of sodium hydroxide per minute under standard conditions [30°C, pH 4.5].

In one aspect, the pectinesterase is present at a concentration of at least 2 units per litre of crude wine, such as at least 5 units, or at least 10 units or at least 15 units per litre of the wine solution. More preferably it is present at a concentration of at least 20 units, such as at least 25 units or at least 30 units, or at least 35 units or at least 40 units or at least 45 units or at least 50 units or at least 55 units or at least 60 units or at least 65 units or at least 70 units or at least 75 units, or at least 80 units or at least 85 units or at least 90 units or at least 95 units or at least 100 units or at least 105 units or at least 110 units or at least 115 units or at least 120 units per litre of crude wine.

In one aspect, the invention further comprises contacting the crude wine with an endoarabinanase.

### Endoarabinanases (EC 3.2.1.99)

Endoarabinanases are enzymes that catalyze the endohydrolysis of (1,5)-alphaarabinofuranosidic linkages in (1,5)-arabinans. They are alternatively also called as Arabinan endo-1,5-alpha-L-arabinosidase or Endo-1,5-alpha-L-arabinanase.

Endoarabinanase is assayed using the substrate Azurine-crosslinked-debranched arabinan (AZCL-Arabinan), commercially available as Arabinazyme tablets (available from Megazyme International, Ireland Ltd, Wicklow, Ireland).

A preferred endoarabinanase is the endoarabinanase present in Neopectinase PL-1 available from Novozymes A/S.

One unit of endoarabinanase activity is defined as the amount of enzyme required to release 1 umole of arabinose reducing sugar equivalents from Carboxy Methyl (CM)-linear arabinan per minute under the defined assay conditions [40°C, pH 4.0].

In one aspect, the endoarabinanase is present at a concentration of at least 0.1 units per litre of the crude wine solution. More preferably it is present at a concentration of at least 0.15 units, such as at least 0.2 units or at least 0.25 units, or at least 0.3 units or at least 0.35 units per litre of crude wine.

The enzymes may be added as enzyme compositions. They may consist of one enzyme or more than one enzyme. The enzyme composition, in addition to the enzyme(s), may also contain at least one other substance, for example but not limited to buffer, surfactants etc. The enzyme compositions may be in any art-recognized form, for example, solid, liquid, emulsion, gel, or paste. Such forms are known to the person skilled in the art. In one aspect of the invention more than one enzyme composition, each containing different enzymes may be added. In another aspect of the invention, one enzyme composition containing all the necessary enzymes may be added. In yet another aspect of the invention, one enzyme composition containing a few of the enzymes and at least one another composition containing some or all of the rest of the enzymes may be added. The enzymes may be added to the crude wine at any point of time between the first racking and the final filtration. The enzymes may be added at the same time or in sequence one after another or even as a combination of two enzymes and one enzyme separately, one after the other.

In one aspect, the polygalacturonase and the pectin lyase are present as one combination and the beta glucanase is added separately.

In another aspect, the beta glucanase and the polygalacturonase are present as one combination and the pectin lyase is added separately.

In one aspect, the polygalacturonase, the pectin lyase, the pectinesterase and the endoarabinanase are present as one combination and the beta glucanase is added separately.

It is generally preferred that the enzymes are added before the bentonite treatment, if any, since bentonite might adsorb the enzymes and thus prevent their activity.

The quantity of the enzymes to be used will generally depend on the specific requirements and on the specific enzyme. It is generally seen that 5-75 units of beta-1.3 glucanase and 20-60 units of polygalacturonase and 15-150 units of pectin lyase per 1000 ml of crude wine are generally sufficient. The duration of treatment and temperature range thereof are not critical but treatment would normally be from 24 hours to one week, at a temperature in the range of 5-15° C. The enzymatic action is dependent upon treatment time and dosage and, therefore, prolongation of the time for enzyme treatment to a week or more will allow a reduction of the dosage vis a vis a 24 hours treatment time. In addition, while the enzyme activity is acceptable, but not necessarily optimal over the entire pH range, the pH of the wine or the must does affect the activity and, therefore, the treatment at a less than optimum pH will require an increased dosage vis a vis treatment at optimum pH. By way of example, the enzyme at 2 grams per hectoliter has a good effect within a week, as does 4 grams per hectoliter in 48 hours, both at room temperature and the natural pH of wines.

In one aspect of the invention, the filterability of crude wine is improved by at least 20% or 25% or 30% or 35% or 40% or 45% or 50% or 55% or 60% or 65% or 70% or 75% or 80% or even 85% or even 90% or even 95% or even 100% compared to a filtration done in the absence of the added enzymes. There are different methods of filtering known in the art. Examples include but are not limited to coarse filtration, plate and frame filtration, membrane filtration, micro filtration (cross flow), and sterile filtration, etc.

In one aspect of the invention, the wine filtration comprises a filtering on Kieselguhr and/or plate and/or frame and/or cross flow.

Kieselguhr filtration involves use of diatomaceous earth commercially available as, for example, diatomite or celite or dicalite and a supporting screen to remove large particles of matter.

Plate and Frame filtration, also called as pad or sheet filtration, employs a sheet of filter medium (cloth or cellulose material) in between plates which are then squeezed by screw or hydraulic methods.

Membrane filtration uses membranes made of, for example, polycarbonate, polysulfone or even polypropylene of varying pore sizes to remove suspended particles. Ultra membrane filtration and sterile membrane filtration use membranes of very small pore size to remove microorganisms.

Cross flow filtration is a type of filtration in which the fluid to be filtered passes rapidly across the filter surface, with only a fraction permeating through the membrane as filtrate. This type of filtration is different from the traditional perpendicular flow filtration method which involves all of the fluid passing through the filter medium.

### EXAMPLES

### Example 1

Wines from various color (red, white, rosé) and from various winemaking process (short maturation, long maturation, thermo treated) were tested in lab scale, pilot scale and large scale to check the performance of various enzyme in filterability improvement. All lab scale experiments were run in 1.5 liter (magnum) flasks. Each magnum was filled with a well homogenized wine sample. Initially the wine sample is analyzed for turbidity (NTU: Nephelometric Turbidity Units) and filterability (CFLA: filtration criteria Lamothe-Abiet) prior to enzyme addition. The equipment used for measuring CFLA is the same equipment used to measure the Fouling Index developed by Laurenty in 1972. Turbidity is measured directly on the wine sample using a Hach turbidimeter and the value read on the equipment is expressed in NTU. If very turbid, the wine was settled before taking a sample for turbidity measurement. Filterability was measured using a filtration vessel under 1 bar of pressure, filtering 1000 ml of wine through 5.0, 1.2, or 0.65 micron membrane of 25 mm of diameter. Membranes are available from Millipore™. A water permeability test was run to verify the good performance of the membranes (repeatability) prior to the filtration of the wine sample. Gross wines was usually filtered through 5 micron filters. The volume of wine filtered was monitored over time from 0 to 5 minutes on a laboratory scale using a chronometer in seconds. The obtained filtration curve was retrieved as a filtration straight. The filterability follows the progressive pore blocking filtration law. The slope of the filtration straight is related to the wine filterability. It defines the filterability index called CFLA. The lower the value, better the filterability. Then the magnums were treated with the various enzymes combinations. Glucanases were added in the form of Glucanex ®, A combination of glucanase and polygalacturonase was obtained using Vinoflow G®. The pectin lyases were added as Neopectinase PL-1®. (All enzymes are available from Novozymes A/S). One magnum was not enzyme treated (control sample). The wines were kept at room temperature (around 20°C) for one week. After one week, the wine samples were carefully racked from their sediment (plastic soft tube inside the magnum and gentle aspiration to remove the wine without mixing the sediment). After the treatment, the wines were analyzed again for turbidity (NTU) and filterability (CFLA) and filtered through 0.65, 1.2 or 5 micron filter (Millipore) under 1 bar of pressure. During pilot scale experiments, the samples were kept under wine conditions (i.e. wine cellar temperatures from 5°C to 10-13°C) while in large scale trials, large volumes of wines (300 hl to 1200 hl) were used. The results of one such trial is given in table 1.

**Table 1: Effect of enzyme combinations on wine filtration.**

| | CFLA 0.65 | CFLA 1.2 | CFLA 5.0 | NTU % reduction | Glucanase BGXU/hl | Polygalacturonase (PGNU/ hl*) | Pectin Lyase (PLU/ hl) | Pectin Esterase (PEU/ hl) | EndoArabinase (endoarabinase U/hl) |
|---|---|---|---|---|---|---|---|---|---|
| Beta 1.3 Glucanase alone | 1.3 | 1.1 | 1.9 | 20 | 750 | 0 | 11 | 0 | 7 |
| Beta 1.3 Glucanase + Polygalacturonase | 2.4 | 2.1 | 3.6 | 40 | 750 | 3525 | 187 | 144 | 9 |
| Beta 1.3 Glucanase + polygalacturonase+ Pectin Lyase | 4.3 | 3.0 | 17.8 | 49 | 750 | 7481 | 4369 | 16709 | 40 |

| | | | | | | | | | |
|---|---|---|---|---|---|---|---|---|---|
| *hl indicates hectolitre | | | | | | | | | |

From the table it is evident that a combination of beta-1.3-glucanase, a polygalacturonase and a pectin lyase performs substantially better in wine filtration than combinations with beta-1.3-glucanase alone or combinations with both a beta-1.3-glucanase and a polygalacturonase.

Also it is evident that a combination of beta-1.3-glucanase, a polyga-lacturonase a pectin lyase, a pectinesterase and an endoarabinanase performs substantially better in wine filtration than combinations with beta-1.3-glucanase alone or combinations with both a beta-1.3-glucanase and a polygalacturonase and/or a pectin lyase.

## Claims

1. A method of improving the filterability in wine filtration comprising:
a) providing a crude wine solution;
b) contacting the crude wine solution with
i. a beta-1.3-glucanase;
ii. a polygalacturonase;
iii. a pectin lyase;
iv. a pectinesterase;
v. an endoarabinanase;
c) obtaining the wine filtrate.

2. The method according to claim 1, wherein the polygalacturonase is obtainable from submerged fermentation.

3. The method according to claim 1, wherein the pectin lyase is obtainable from surface fermentation.

4. The method according to claim 1 wherein the polygalacturonase and/or pectin lyase and/or pectinesterase and/or endoarabinanase is obtainable from Aspergillus.

5. The method according to claim 4, wherein the Aspergillus is A.niger or A. japonicus.

6. The method according to claim 1 wherein the beta-1.3-glucanase is present at a concentration of at least 5 BGXU/litre.

7. The method according to claim 1 wherein the polygalacturonase is present at a concentration of at least 40 PGNU/Litre.

8. The method according to claim 1 wherein the pectin lyase is present at a concentration of at least 20 PLU/Litre

9. The method according to claim 1 further comprising contacting with a pectinesterase at a concentration of at least 2.0 units/Litre.

10. The method according to claim 1 further comprising contacting with an endoarabinanase at a concentration of at least 0.15 units/Litre.

11. The method according to claim 1, wherein the filterability is improved by at least 30% compared to a filtration done in the absence of the added enzymes.

12. The method according to claim 1, wherein the wine filtration comprises a filtering on Kieselguhr and/or plate and/or frame and/or cross flow.

## Patentansprüche

1. Verfahren zum Verbessern der Filtrierfähigkeit in der Weinfiltration, umfassend:
a) Bereitstellen einer Rohweinlösung;
b) In-Kontakt-Bringen der Rohweinlösung mit
i. einer beta-1,3-Glucanase;
ii. einer Polygalacturonase;
iii. einer Pektinlyase;
iv. einer Pektinesterase;
v. einer Endoarabinanase
c) Erhalten des Weinfiltrats.

2. Verfahren nach Anspruch 1, wobei die Polygalacturonase aus Tauchfermentation erhältlich ist.

3. Verfahren nach Anspruch 1, wobei die Pektinlyase aus Oberflächenfermentation erhältlich ist.

4. Verfahren nach Anspruch 1, wobei die Polygalacturonase und/oder die Pektinlyase und/oder die Pektinesterase und/oder die Endoarabinanase aus *Aspergillus* erhältlich ist.

5. Verfahren nach Anspruch 4, wobei der *Aspergillus A. niger* oder *A. japonicus* ist.

6. Verfahren nach Anspruch 1, wobei die beta-1,3-Glucanase bei einer Konzentration von mindestens 5 BGXU/Liter vorhanden ist.

7. Verfahren nach Anspruch 1, wobei die Polygalacturonase bei einer Konzentration von mindestens 40 PGNU/Liter vorhanden ist.

8. Verfahren nach Anspruch 1, wobei die Pektinlyase bei einer Konzentration von mindestens 20 PLU/Liter vorhanden ist.

9. Verfahren nach Anspruch 1, des Weiteren umfassend das In-Kontakt-Bringen einer Pektinesterase bei einer Konzentration von mindestens 2,0 Einheiten/Liter.

10. Verfahren nach Anspruch 1, des Weiteren umfassend das In-Kontakt-Bringen mit einer Endorarabinanase bei einer Konzentration von mindestens 0,15 Einheiten/Liter.

11. Verfahren nach Anspruch 1, wobei die Filtrierfähigkeit im Vergleich zu einer Filtration, die in Abwesenheit der hinzugefügten Enzyme durchgeführt wird, durch mindestens 30% verbessert ist.

12. Verfahren nach Anspruch 1, wobei die Weinfiltration ein Filtern auf Kieselgur und/oder einer Platte und/oder einem Rahmen und/oder einem Querstrom umfasst.

## Revendications

1. Procédé d'amélioration de la filtrabilité dans la filtration de vin comprenant :
a) la fourniture d'une solution de vin brute ;
b) la mise en contact de la solution de vin brute avec
i. une bêta-1,3-glucanase ;
ii. une polygalacturonase ;
iii. une pectine lyase ;
iv. une pectinestérase ;
v. une endoarabinanase ;
c) l'obtention du filtrat de vin.

2. Procédé selon la revendication 1, dans lequel la polygalacturonase peut être obtenue à partir d'une fermentation submergée.

3. Procédé selon la revendication 1, dans lequel la pectine lyase peut être obtenue à partir d'une fermentation de surface.

4. Procédé selon la revendication 1, dans lequel la polygalacturonase et/ou la pectine lyase et/ou la pectinestérase et/ou l'endoarabinanase peuvent être obtenues à partir d'Aspergillus.

5. Procédé selon la revendication 4, dans lequel l'Aspergillus est A. niger ou A. japonicus.

6. Procédé selon la revendication 1, dans lequel la bêta-1,3-glucanase est présente à une concentration d'au moins 5 BGXU/litre.

7. Procédé selon la revendication 1, dans lequel la polygalacturonase est présente à une concentration d'au moins 40 PGNU/litre.

8. Procédé selon la revendication 1, dans lequel la pectine lyase est présente à une concentration d'au moins 20 PLU/litre.

9. Procédé selon la revendication 1, comprenant en outre la mise en contact d'une pectinestérase à une concentration d'au moins 2,0 unités/litre.

10. Procédé selon la revendication 1, comprenant en outre la mise en contact d'une endoarabinanase à une concentration d'au moins 0,15 unités/litre.

11. Procédé selon la revendication 1, dans lequel la filtrabilité est améliorée par au moins 30 % par comparaison à une filtration réalisée en l'absence des enzymes ajoutées.

12. Procédé selon la revendication 1, dans lequel la filtration de vin comprend une filtration sur un kieselguhr et/ou une plaque et/ou un cadre et/ou un flux tangentiel.
